# EUROPEAN PATENT APPLICATION

(11) **EP 4 365 128 A1**
(43) Date of publication of application: **08.05.2024**
(21) Application number: 22848960.5
(22) Date of filing: 14.04.2022
(51) Int. Cl.: C01B 3/02, C25B 11/02, C25B 11/032, C25B 9/00, C25B 9/015, C25B 9/23, C25B 9/67, C25B 15/021, C25B 1/042

(54) **HIGH-TEMPERATURE STEAM ELECTROLYSIS DEVICE, HYDROGEN PRODUCTION METHOD, AND HYDROGEN PRODUCTION SYSTEM**

(30) Priority: 30.07.2021 JP 2021125554
(71) Applicant: Mitsubishi Heavy Industries, Ltd., Tokyo 100-8332 (JP)
(72) Inventor: USUI, Yukinori, Tokyo 100-8332 (JP); ASANO, Koji, Tokyo 100-8332 (JP); KOSHIRO, Ikumasa, Tokyo 100-8332 (JP); HARA, Nobuhide, Tokyo 100-8332 (JP)
(74) Representative: Cabinet Beau de Loménie
(86) International application number: PCT/JP2022/017839
(87) International publication number: WO 2023/007877

(57) **Abstract**

A high-temperature steam electrolysis device, a hydrogen production method, and a hydrogen production system include: a high-temperature steam electrolysis cell having a cylindrical shape in which a hydrogen/steam gas diffusion electrode layer is disposed on an inner side of an electrolyte layer and an oxygen gas diffusion electrode layer is disposed on an outer side thereof; a steam flow channel in which high-temperature steam flows on an inner side of the high-temperature steam electrolysis cell; and a helium flow channel in which high-temperature helium flows to heat the high-temperature steam electrolysis cell on an outer side of the high-temperature steam electrolysis cell.

## Description

### Field

The present disclosure relates to a high-temperature steam electrolysis device, a hydrogen production method, and a hydrogen production system. Background

As one of hydrogen production technique, there is known a high-temperature steam electrolysis method. The electrolysis method is advantageous in that raw materials are inexpensive and carbon dioxide (CO₂) is not generated in a hydrogen production process. However, in the electrolysis method, hydrogen is generated by electrolysis, so that there is the problem that cost of electric energy is high. Thus, considered is a high-temperature steam electrolysis method for reducing electric energy required for electrolysis by electrolyzing high-temperature steam at 700°C or higher.

However, it is difficult to generate high-temperature steam at 700°C or higher, and in the related art, a temperature of water is raised by a boiler, an electric furnace, or the like to generate steam, and the steam is electrolyzed to generate hydrogen. However, in this case, the temperature of the steam is 100°C to 200°C, which is lower than the high-temperature steam at 700°C or higher required for the high-temperature steam electrolysis method. Additionally, electrolysis of water is endothermic reaction, so that 286 joule of heat needs to be supplied from the outside to electrolyze 1 mole of water. Thus, the steam is electrolyzed at 700°C to 900°C while compensating for heat absorption and sensible heat of the steam at the time of electrolysis of water by Joule heat of a water electrolysis cell. Such a conventional hydrogen production device is disclosed in the following Patent Literature 1, for example.

### Citation List

### Patent Literature

Patent Literature 1: Japanese Translation of PCT International Application Publication No. 2019-537815 Summary

### Technical Problem

With a hydrogen production device using a high-temperature steam electrolysis method, electric energy required for electrolysis of water can be reduced by using high-temperature steam. However, actually, in the conventional hydrogen production device, generation energy of high-temperature steam at a temperature corresponding to an operating temperature of electrolysis of water is covered by required electric energy, and endothermic reaction of electrolysis of water is also covered by the electric energy. That is, the conventional hydrogen production device is operated at an electric potential of a thermal neutral point at which heat absorption of water electrolysis and heat generation of the water electrolysis cell are balanced, or an electric potential equal to or higher than the electric potential of the thermal neutral point, so that cost of electric energy is high. Most of the cost of the hydrogen production device is electric power, so that, if the electric power is renewable energy, carbon dioxide can be reduced. However, supply of electric power of renewable energy is unstable, so that it is difficult to apply the renewable energy to the hydrogen production device. On the other hand, electric energy generated by a thermal power generation system is accompanied by generation of carbon dioxide.

The present disclosure solves the problem described above, and an object thereof is to provide a hydrogen production system and a hydrogen production method for suppressing generation of carbon dioxide and reducing energy cost.

### Solution to Problem

In order to achieve the above object, a high-temperature steam electrolysis device according to the present disclosure includes: a high-temperature steam electrolysis cell having a cylindrical shape in which a hydrogen/steam gas diffusion electrode layer is disposed on an inner side of an electrolyte layer and an oxygen gas diffusion electrode layer is disposed on an outer side thereof; a steam flow channel in which high-temperature steam flows on an inner side of the high-temperature steam electrolysis cell; and a helium flow channel in which high-temperature helium flows to heat the high-temperature steam electrolysis cell on an outer side of the high-temperature steam electrolysis cell.

Further, a hydrogen production method according to the present disclosure includes the steps of: causing high-temperature steam to flow on an inner side of a high-temperature steam electrolysis cell having a cylindrical shape in which a hydrogen/steam gas diffusion electrode layer is disposed on an inner side of an electrolyte layer and an oxygen gas diffusion electrode layer is disposed on an outer side thereof; and causing high-temperature helium to flow on an outer side of the high-temperature steam electrolysis cell to heat the high-temperature steam electrolysis cell.

Further, a hydrogen production system according to the present disclosure includes: a heat exchanger that heats steam by using high-temperature helium heated by thermal energy at 600°C or higher; the high-temperature steam electrolysis device that produces hydrogen by using the steam heated by the high-temperature helium; and a heating device that heats the high-temperature steam electrolysis device by using the high-temperature helium heated by the thermal energy.

### Advantageous Effects of Invention

With the high-temperature steam electrolysis device, the hydrogen production method, and the hydrogen production system according to the present disclosure, generation of carbon dioxide can be suppressed, and energy cost can be reduced.

### Brief Description of Drawings

FIG. 1 is a schematic configuration diagram representing a hydrogen production system according to a first embodiment.
FIG. 2 is a schematic diagram representing a high-temperature steam electrolysis device according to the first embodiment.
FIG. 3 is a schematic diagram representing a high-temperature steam electrolysis cell.
FIG. 4 is a graph representing a relation between electric density and thermal energy.
FIG. 5 is a schematic diagram representing a high-temperature steam electrolysis device according to a second embodiment.
FIG. 6 is a schematic diagram representing a high-temperature steam electrolysis device according to a first modification of the second embodiment.
FIG. 7 is a schematic diagram representing a high-temperature steam electrolysis device according to a second modification of the second embodiment.
FIG. 8 is a schematic diagram representing a high-temperature steam electrolysis device according to a third modification of the second embodiment.
FIG. 9 is a schematic configuration diagram representing a hydrogen production system according to a third embodiment.
FIG. 10 is a schematic configuration diagram representing a hydrogen production system according to a fourth embodiment.

### Description of Embodiments

The following describes preferred embodiments of the present disclosure in detail with reference to the drawings. The present disclosure is not limited to the embodiments. In a case in which there are a plurality of embodiments, a combination of the embodiments is also encompassed by the present disclosure. Constituent elements in the embodiments include a constituent element that is easily conceivable by those skilled in the art, substantially the same constituent element, and what is called an equivalent.

### [First embodiment]

### <Hydrogen production system>

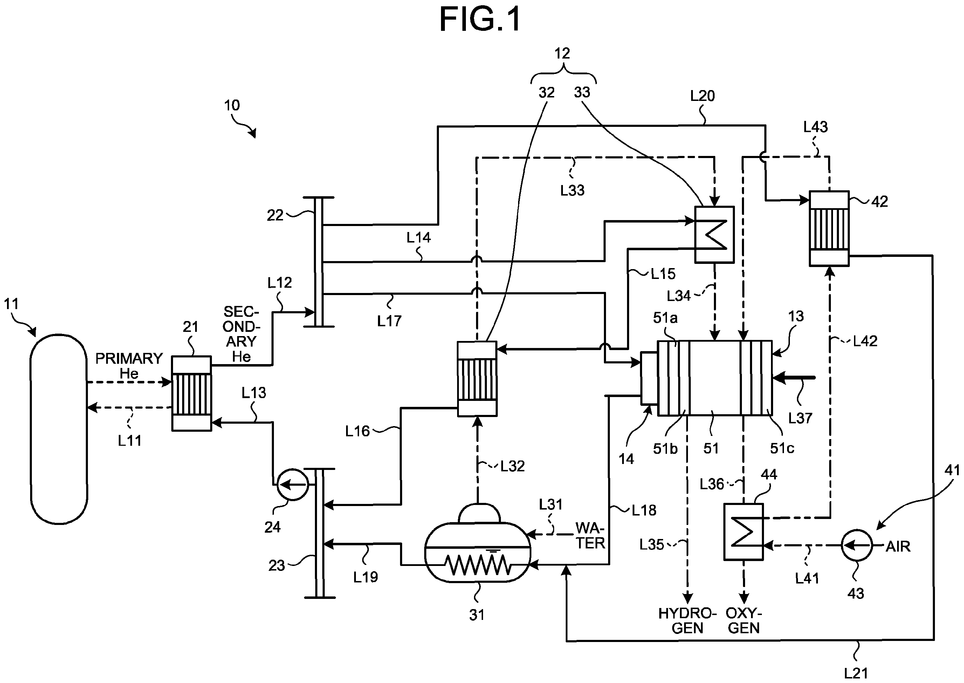

FIG. 1 is a schematic configuration diagram representing a hydrogen production system according to a first embodiment.

In the first embodiment, as illustrated in FIG. 1, a hydrogen production system 10 includes a heat source 11, a heat exchanger 12, a high-temperature steam electrolysis device (SOEC) 13, and a heating device 14.

The heat source 11 is a high-temperature gas furnace, and can generate thermal energy at 900°C or higher. The heat source 11 is not limited to the high-temperature gas furnace, and may be any heat source that can generate thermal energy at 600°C or higher. As the heat source, for example, an electric furnace, a heliostat type solar heat collecting device, a boiler, exhausted heat of a gas turbine, and the like may be applied.

The high-temperature gas furnace as the heat source 11 is a nuclear reactor that uses a ceramics material for coating of fuel, helium for a coolant, and graphite for a moderator. The high-temperature gas furnace can generate a helium gas as a heating medium at 900°C or higher. The high-temperature gas furnace as the heat source 11 is coupled to a circulation path L11. The circulation path L11 is also coupled to an intermediate heat exchanger 21 in addition to the heat source 11. The intermediate heat exchanger 21 is coupled to one end part of a supply path L12 and one end part of a return path L13.

The intermediate heat exchanger 21 performs heat exchange between primary helium (a primary heating medium) flowing in the circulation path L11 and secondary helium (a secondary heating medium) flowing in the supply path L12 and the return path L13. That is, the intermediate heat exchanger 21 heats the secondary helium flowing in the supply path L12 and the return path L13 to 900°C, for example, by the primary helium at 950°C flowing in the circulation path L11, for example.

The other end part of the supply path L12 is coupled to a supply header 22. The other end part of the return path L13 is coupled to a return header 23. A circulator 24 is disposed on the return path L13. The hydrogen production system 10 produces hydrogen by using the secondary helium as a heating medium that is heated by thermal energy at 900°C or higher generated in the heat source 11.

The high-temperature steam electrolysis device 13 produces hydrogen by water electrolysis at a high temperature of about 700°C to 900°C using a high-temperature steam electrolysis cell 51 as a solid oxide electrochemical cell. The high-temperature steam electrolysis device 13 includes an electrolyte layer 51a, a hydrogen/steam gas diffusion electrode layer 51b, and an oxygen gas diffusion electrode layer 51c.

The high-temperature steam electrolysis cell 51 has a cylindrical shape as described later. The electrolyte layer 51a is an electrolyte film having a cylindrical shape and constituted of a solid electrolyte of an oxygen ion conductor. The hydrogen/steam gas diffusion electrode layer 51b is disposed on an inner side of the electrolyte layer 51a, and the oxygen gas diffusion electrode layer 51c is disposed on an outer side thereof. Herein, the hydrogen/steam gas diffusion electrode layer 51b is a cathode electrode on a hydrogen side, and the oxygen gas diffusion electrode layer 51c is an anode electrode on an oxygen side.

A steam generator 31 heats water by thermal energy of the secondary helium to generate steam. The steam generator 31 is coupled to a water supply path L31, and also coupled to one end part of a first steam supply path L32. The heat exchanger 12 includes a first heat exchanger 32 and a second heat exchanger 33. The first heat exchanger 32 is coupled to the other end part of the first steam supply path L32, and also coupled to one end part of a second steam supply path L33. The second heat exchanger 33 is coupled to the other end part of the second steam supply path L33, and also coupled to one end part of a third steam supply path L34.

The first heat exchanger 32 superheats steam by the thermal energy of the secondary helium to generate superheated steam. The second heat exchanger 33 further superheats the superheated steam by the thermal energy of the secondary helium. On the steam supply paths L32, L33, and L34, the first heat exchanger 32 is disposed on an upstream side in a flowing direction of the steam, and the second heat exchanger 33 is disposed on a downstream side with respect to the first heat exchanger 32.

The high-temperature steam electrolysis device 13 is coupled to the other end part of the third steam supply path L34. The high-temperature steam electrolysis device 13 is coupled to a hydrogen gas discharge path L35 and an oxygen gas discharge path L36. The high-temperature steam electrolysis device 13 is connected to a power supply path L37, and electric power (electric energy) can be supplied thereto from the outside.

The high-temperature steam electrolysis device 13 produces hydrogen by using the steam heated by the thermal energy of the secondary helium, and also using the electric energy supplied from the power supply path L37. The heating device 14 heats the high-temperature steam electrolysis cell 51 of the high-temperature steam electrolysis device 13 by using the thermal energy of the secondary helium. In this case, the heating device 14 compensates for thermal energy that is lost by endothermic reaction when the high-temperature steam electrolysis device 13 produces hydrogen.

The supply header 22 is coupled to the second heat exchanger 33 via a heating medium supply path L14. The second heat exchanger 33 is coupled to the first heat exchanger 32 via a heating medium supply path L15. The first heat exchanger 32 is coupled to the return header 23 via a heating medium supply path L16. That is, the secondary helium in the supply header 22 is supplied to the second heat exchanger 33 via the heating medium supply path L14 to superheat the steam, supplied from the second heat exchanger 33 to the first heat exchanger 32 via the heating medium supply path L15 to superheat the steam, and returned from the first heat exchanger 32 to the return header 23 via the heating medium supply path L16.

The supply header 22 is also coupled to the heating device 14 via a heating medium supply path L17. The heating device 14 is coupled to the steam generator 31 via a heating medium supply path L18. The steam generator 31 is coupled to the return header 23 via a heating medium supply path L19. That is, the secondary helium in the supply header 22 is supplied to the heating device 14 via the heating medium supply path L17 to heat the high-temperature steam electrolysis cell 51 of the high-temperature steam electrolysis device 13, supplied from the heating device 14 to the steam generator 31 via the heating medium supply path L18 to heat water, and returned from the steam generator 31 to the return header 23 via the heating medium supply path L19.

In the high-temperature steam electrolysis device 13, high-temperature superheated steam is supplied from the third steam supply path L34 to an inner side of the high-temperature steam electrolysis cell 51. The high-temperature steam electrolysis device 13 is heated when the heating device 14 supplies the high-temperature secondary helium to an outer side of the high-temperature steam electrolysis cell 51. Electric power is supplied to the high-temperature steam electrolysis cell 51 from the power supply path L37, and voltage is applied to the hydrogen/steam gas diffusion electrode layer 51b and the oxygen gas diffusion electrode layer 51c. The steam is then electrolyzed in the hydrogen/steam gas diffusion electrode layer 51b, and hydrogen is generated. The generated hydrogen is discharged to the hydrogen gas discharge path L35. On the other hand, oxygen ions generated by electrolysis in the hydrogen/steam gas diffusion electrode layer 51b pass through the electrolyte layer 51a, pass through an inner part of the oxygen gas diffusion electrode layer 51c while being diffused, and are discharged to the oxygen gas discharge path L36 as oxygen.

In the high-temperature steam electrolysis device 13, hydrogen and oxygen are generated based on electrolysis reaction in accordance with the following expression.

H₂O → H₂ + 1/2O₂

A gas supply device 41 supplies gas (air or steam) to the oxygen gas diffusion electrode layer 51c of the high-temperature steam electrolysis cell 51. A gas heating device 42 heats the gas supplied to the oxygen gas diffusion electrode layer 51c by the thermal energy of the secondary helium. A circulator 43 constituting the gas supply device 41 is disposed on a gas supply path L41. A heat exchanger 44 is disposed on the oxygen gas discharge path L36. The gas supply path L41 is coupled to the heat exchanger 44. The heat exchanger 44 is coupled to the gas heating device 42 via a gas supply path L42. The gas heating device 42 is coupled to the oxygen gas diffusion electrode layer 51c via a gas supply path L43.

The supply header 22 is coupled to the gas heating device 42 via a heating medium supply path L20. The gas heating device 42 is coupled to the steam generator 31 via a heating medium supply path L21 and the heating medium supply path L18. That is, the secondary helium in the supply header 22 is supplied to the gas heating device 42 via the heating medium supply path L20 to heat gas, and supplied from the gas heating device 42 to the steam generator 31 via the heating medium supply path L21.

When the circulator 43 is driven, the gas (air) is supplied from the gas supply path L41 to the heat exchanger 44, and heated by oxygen flowing in the oxygen gas discharge path L36. The heated gas is supplied to the gas heating device 42 via the gas supply path L42, and heated by the thermal energy of the secondary helium. The heated gas is supplied to the oxygen gas diffusion electrode layer 51c via the gas supply path L43, and generated oxygen is discharged to the oxygen gas discharge path L36.

### <High-temperature steam electrolysis device>

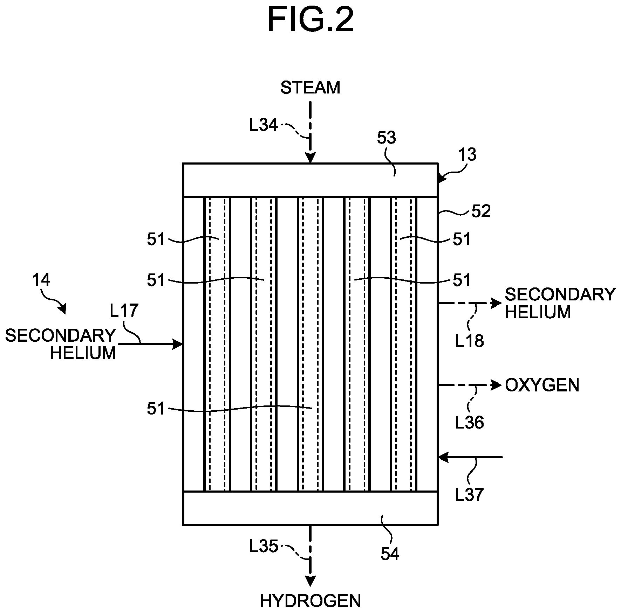

FIG. 2 is a schematic diagram representing the high-temperature steam electrolysis device according to the first embodiment.

As illustrated in FIG. 2, the high-temperature steam electrolysis device 13 is configured by a plurality of the high-temperature steam electrolysis cells 51 housed in a container. That is, the high-temperature steam electrolysis device 13 includes the high-temperature steam electrolysis cells 51, a container main body 52, an inlet header 53, and an outlet header 54. The high-temperature steam electrolysis cell 51 has a cylindrical shape. The container main body 52 has a hollow shape. The inlet header 53 is fixed to an upper part as one end part of the container main body 52, and the outlet header 54 is fixed to a lower part as the other end part thereof. The inlet header 53 is coupled to the other end part of the third steam supply path L34, and the outlet header 54 is coupled to one end part of the hydrogen gas discharge path L35. The container main body 52 is coupled to one end part of the oxygen gas discharge path L36.

The heating device 14 is disposed on the high-temperature steam electrolysis device 13. That is, the container main body 52 is coupled to the other end part of the heating medium supply path L17, and also coupled to one end part of the heating medium supply path L18.

Thus, the high-temperature secondary helium is supplied to an inner part of the container main body 52 through the heating medium supply path L17. The high-temperature steam electrolysis cells 51 are heated when the high-temperature secondary helium is brought into contact with an outer surface thereof. The secondary helium after heating the high-temperature steam electrolysis cells 51 is discharged from the container main body 52 to the heating medium supply path L18. The high temperature steam is supplied to the inlet header 53 through the third steam supply path L34, and supplied from the inlet header 53 to inner parts of the high-temperature steam electrolysis cells 51. The high-temperature steam electrolysis cells 51 electrolyze the steam to generate hydrogen and oxygen when electric power is supplied thereto from the power supply path L37. The hydrogen passes through the inner parts of the high-temperature steam electrolysis cells 51 to flow to the outlet header 54, and is discharged to the hydrogen gas discharge path L35. On the other hand, the oxygen is discharged to the oxygen gas discharge path L36.

The hydrogen discharged to the hydrogen gas discharge path L35 contains steam, so that it is preferable to remove the steam from the hydrogen by processing the hydrogen discharged to the hydrogen gas discharge path L35 by a condenser. The oxygen generated on the outer surface of the high-temperature steam electrolysis cell 51 is mixed in the secondary helium, so that it is preferable to separate, from the secondary helium, and regenerate the oxygen by removing the generated oxygen by oxygen ion mixed conductive diaphragm and the like, and maintain oxygen concentration of the secondary helium within a range of a rated low concentration.

### <High-temperature steam electrolysis cell>

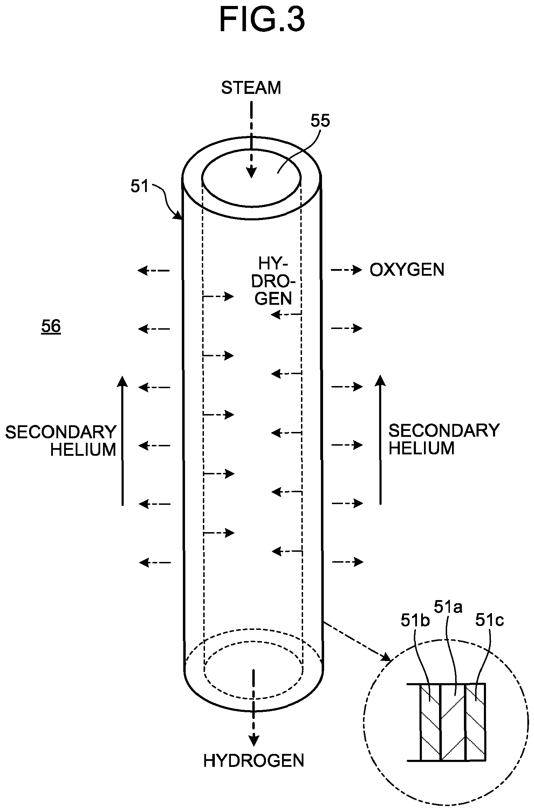

FIG. 3 is a schematic diagram representing the high-temperature steam electrolysis cell.

As illustrated in FIG. 2 and FIG. 3, the high-temperature steam electrolysis device 13 includes the high-temperature steam electrolysis cell 51, a steam flow channel 55, and a helium flow channel 56.

The high-temperature steam electrolysis cell 51 has a cylindrical shape. The inner diameter of the high-temperature steam electrolysis cell 51 is uniform along a longitudinal direction. The high-temperature steam electrolysis cell 51 includes the electrolyte layer 51a, the hydrogen/steam gas diffusion electrode layer 51b, and the oxygen gas diffusion electrode layer 51c. The electrolyte layer 51a has a cylindrical shape. The hydrogen/steam gas diffusion electrode layer 51b has a cylindrical shape, and is disposed on the inner side of the electrolyte layer 51a. The oxygen gas diffusion electrode layer 51c has a cylindrical shape, and is disposed on the outer side of the electrolyte layer 51a.

The high-temperature steam electrolysis cell 51 has an internal space formed therein due to its cylindrical shape, and the third steam supply path L34 is connected to one side of the internal space via the inlet header 53. Thus, in the high-temperature steam electrolysis cell 51, the steam flow channel 55 through which the high-temperature steam flows is formed on the inner side of the hydrogen/steam gas diffusion electrode layer 51b. The hydrogen gas discharge path L35 is then connected to the other side of the internal space (steam flow channel 55) via the outlet header 54.

The outer surface of the high-temperature steam electrolysis cell 51 is exposed due to its cylindrical shape, and the heating medium supply path L17 is connected to an external space via the container main body 52, so that the helium flow channel 56 through which the high-temperature helium flows to heat the high-temperature steam electrolysis cell 51 is formed on the outer side of the oxygen gas diffusion electrode layer 51c in the high-temperature steam electrolysis cell 51. The external space (container main body 52) is connected to the heating medium supply path L18 and the oxygen gas discharge path L36.

In this case, it is preferable that the heating medium supply path L17 is connected to the lower part of the container main body 52, and the heating medium supply path L18 is coupled to the upper part of the container main body 52. Due to this configuration, the high-temperature helium inside the container main body 52 flows from the lower part to the upper part of the container main body 52. Accordingly, the steam descending inside the high-temperature steam electrolysis cell 51 and the secondary helium ascending outside the high-temperature steam electrolysis cell 51 become opposing flows. As a result, in the high-temperature steam electrolysis cell 51, temperature distribution in the longitudinal direction is reduced, and hydrogen generation function is improved. However, the flow of the steam and the flow of the secondary helium in the high-temperature steam electrolysis cell 51 are not limited to the opposing flows, and may be appropriately set in accordance with a form, arrangement, and the like of the high-temperature steam electrolysis cell 51.

Furthermore, in the high-temperature steam electrolysis cell 51, the pressure of the high-temperature steam flowing in the steam flow channel 55 is set to be higher than the pressure of the high-temperature secondary helium flowing in the helium flow channel 56. In this case, the high-temperature secondary helium is exchanged for the primary helium generated in the high-temperature gas furnace as the heat source 11 in the intermediate heat exchanger 21, supplied to the heating device 14 through the supply path L12, the supply header 22, and the heating medium supply path L17, and heats the high-temperature steam electrolysis device 13. On the other hand, regarding the high-temperature steam, the steam generator 31 generates the steam by heating water with the high-temperature secondary helium, and the steam is superheated by the high-temperature secondary helium in the first heat exchanger 32 and the second heat exchanger 33 and supplied to the high-temperature steam electrolysis device 13. Due to the steam generator 31, the first heat exchanger 32, and the second heat exchanger 33, the pressure of the high-temperature steam supplied to the steam flow channel 55 becomes higher than the pressure of the high-temperature secondary helium supplied to the helium flow channel 56.

Thus, in the high-temperature steam electrolysis cell 51, the pressure in the steam flow channel 55 on the inner side becomes higher than the pressure in the helium flow channel 56 on the outer side, so that the high-temperature steam electrolysis cell 51 is prevented from being damaged due to external pressure, and integrity of the structure is secured. Permeation of the secondary helium flowing in the helium flow channel 56 to the steam flow channel 55 is then suppressed. The generated oxygen tends to be easily diffused to the outside of the high-temperature steam electrolysis cell 51 due to the high-pressure steam flow channel 55. When diffusion speed of the oxygen is increased, concentration polarization of the hydrogen/steam gas diffusion electrode layer 51b is reduced, and contamination of the oxygen to be recombined with hydrogen is suppressed.

### <Hydrogen production method>

A hydrogen production method according to the present embodiment includes a step of generating thermal energy at 600°C or higher, a step of heating the steam by using the secondary helium heated by the thermal energy, a step of heating the high-temperature steam electrolysis device 13 by using the secondary helium heated by the thermal energy, and a step of producing hydrogen by the high-temperature steam electrolysis device 13 by using the steam heated by the secondary helium.

Additionally, the hydrogen production method according to the present embodiment includes a step of causing the high-temperature steam to flow on the inner side of the high-temperature steam electrolysis cell 51 having a cylindrical shape, and a step of causing the high-temperature helium to flow on the outer side of the high-temperature steam electrolysis cell 51 to heat the high-temperature steam electrolysis cell 51.

Specifically, as illustrated in FIG. 1, the high-temperature gas furnace as the heat source 11 generates primary helium at 950°C, for example. The high-temperature primary helium flows through the circulation path L11, exchanges heat with the secondary helium flowing in the return path L13 in the intermediate heat exchanger 21, and heats the secondary helium to 900°C, for example. The secondary helium subjected to heat exchange in the intermediate heat exchanger 21 flows through the supply path L12 to be supplied to the supply header 22 at about 900°C, for example.

When the circulator 24 is driven, the high-temperature secondary helium circulates while being heated by the intermediate heat exchanger 21. The secondary helium in the supply header 22 is supplied to the second heat exchanger 33 via the heating medium supply path L14 to superheat the steam, and supplied from the second heat exchanger 33 to the first heat exchanger 32 via the heating medium supply path L15 to superheat the steam. The secondary helium in the supply header 22 is supplied to the heating device 14 via the heating medium supply path L17 to heat the high-temperature steam electrolysis device 13. Furthermore, the secondary helium in the supply header 22 is supplied to the gas heating device 42 via the heating medium supply path L20 to heat the gas.

The steam generator 31 heats water supplied from the water supply path L31 to generate steam. The steam is supplied to the first heat exchanger 32 via the first steam supply path L32 to be superheated, supplied to the second heat exchanger 33 via the second steam supply path L33 to be further superheated, and supplied to the high-temperature steam electrolysis device 13 as high-temperature steam at 850°C, for example. The high-temperature steam electrolysis device 13 is heated by the secondary helium of the heating device 14, electrolyzes the high-temperature steam by electric power supplied from the power supply path L37, and generates hydrogen and oxygen.

That is, as illustrated in FIG. 2 and FIG. 3, the high-temperature secondary helium is supplied to the inner part of the container main body 52 through the heating medium supply path L17, and flows through the helium flow channel 56 to heat the high-temperature steam electrolysis cells 51. On the other hand, the high-temperature steam is supplied to the inlet header 53 through the third steam supply path L34, and supplied from the inlet header 53 to a plurality of the steam flow channels 55 of the high-temperature steam electrolysis cells 51. At this point, electric power is supplied to the high-temperature steam electrolysis cell 51 from the power supply path L37, and voltage is applied to the hydrogen/steam gas diffusion electrode layer 51b and the oxygen gas diffusion electrode layer 51c. The steam in the steam flow channel 55 is then electrolyzed in the hydrogen/steam gas diffusion electrode layer 51b to generate hydrogen, and the hydrogen flows downward in the steam flow channel 55. On the other hand, oxygen ions generated by electrolysis in the hydrogen/steam gas diffusion electrode layer 51b pass through the high-temperature steam electrolysis cell 51 while being diffused, and are discharged to the helium flow channel 56 as oxygen.

The hydrogen that has flowed downward in the steam flow channel 55 is discharged to the hydrogen gas discharge path L35 via the outlet header 54. On the other hand, the oxygen is discharged to the oxygen gas discharge path L36.

As illustrated in FIG. 1, the hydrogen generated by the high-temperature steam electrolysis device 13 is discharged from the hydrogen gas discharge path L35, and the oxygen is discharged from the oxygen gas discharge path L36. At this point, when the circulator 43 is driven, the gas (air) is supplied from the gas supply path L41 to the heat exchanger 44 to be heated, supplied to the gas heating device 42 via the gas supply path L42 to be heated, and supplied to the oxygen gas diffusion electrode layer 51c via the gas supply path L43. The oxygen generated by the high-temperature steam electrolysis device 13 is discharged to the oxygen gas discharge path L36 by high-temperature gas supplied from the gas supply path L43.

### <Principle of hydrogen production method>

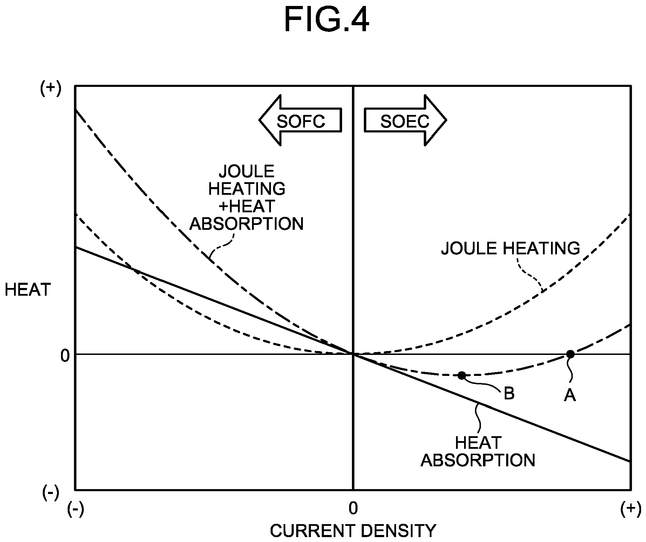

FIG. 4 is a graph representing a relation between electric density and thermal energy.

FIG. 4 represents a relation between current density and thermal energy in a fuel battery (SOFC) and a high-temperature steam electrolysis device (SOEC). As illustrated in FIG. 4, heat absorption caused by high-temperature steam electrolysis is lowered as a primary function (proportional) in accordance with increasing current density. Joule heating caused by high-temperature steam electrolysis rises as a secondary function in accordance with increasing current density. Thus, heat obtained by combining Joule heating and heat absorption is lowered in accordance with increasing current density, and rises.

In conventional hydrogen production systems, the heat source (high-temperature gas furnace) 11 as in the first embodiment is not provided, so that heat generated by Joule heating caused in the high-temperature steam electrolysis device compensates for endothermic reaction at the time of electrolyzing water. That is, conventional high-temperature steam electrolysis devices operate at an electric potential equal to or higher than a thermal neutral point A.

On the other hand, the hydrogen production system 10 in the first embodiment includes the heat source (high-temperature gas furnace) 11, so that the hydrogen production system 10 can compensate for endothermic reaction at the time of electrolyzing water by heating the steam and the high-temperature steam electrolysis device 13 (high-temperature steam electrolysis cell 51) using the high-temperature helium that is heated by thermal energy at 600°C or higher generated by the heat source 11. Thus, the hydrogen production system 10 in the first embodiment can operate at an electric potential of an operating point B equal to or lower than the thermal neutral point A. At the operating point B, it is possible to reduce electric energy used for electrolysis of water without converting electric energy into thermal energy (Joule heating).

### [Second embodiment]

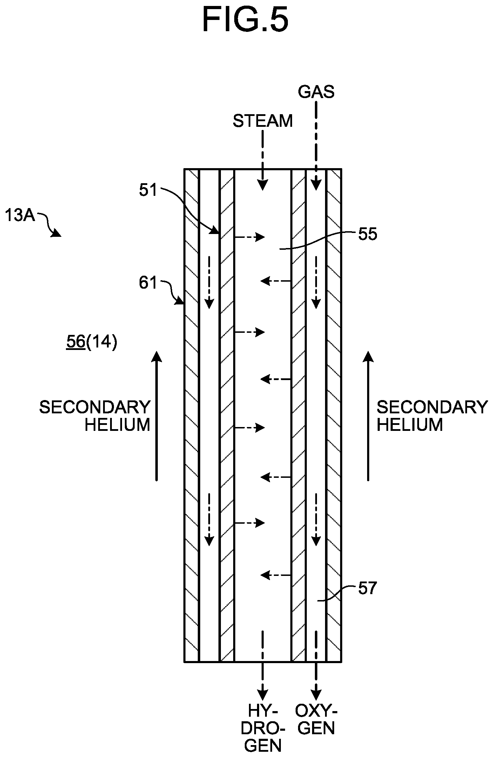

FIG. 5 is a schematic diagram representing the high-temperature steam electrolysis device according to a second embodiment. A member having the same function as that in the first embodiment described above is denoted by the same reference numeral, and detailed description thereof will not be repeated.

As illustrated in FIG. 5, a high-temperature steam electrolysis device 13A includes the high-temperature steam electrolysis cell 51, the steam flow channel 55, the helium flow channel 56, and a guide cylinder 61.

The high-temperature steam electrolysis cell 51 has the same configuration as that in the first embodiment. The guide cylinder 61 is disposed on a radially outer side of the high-temperature steam electrolysis cell 51 with a gap. The guide cylinder 61 has a cylindrical shape having a predetermined thickness, and has an inner diameter that is uniform along the longitudinal direction. The inner diameter of the guide cylinder 61 is larger than an outer diameter of the high-temperature steam electrolysis cell 51, so that an internal space is formed between the high-temperature steam electrolysis cell 51 and the guide cylinder 61.

The steam flow channel 55 through which the high-temperature steam flows is formed on the inner side of the high-temperature steam electrolysis cell 51. The helium flow channel 56 through which the high-temperature helium flows to heat the high-temperature steam electrolysis cell 51 is formed on the outer side of the guide cylinder 61. The helium flow channel 56 constitutes the heating device 14. Additionally, an oxygen flow channel 57 is formed in the internal space between the high-temperature steam electrolysis cell 51 and the guide cylinder 61.

As illustrated in FIG. 1 and FIG. 5, the third steam supply path L34 is connected to an inlet side as an upper side of the steam flow channel 55, and the hydrogen gas discharge path L35 is connected to an outlet side as a lower side thereof. The heating medium supply path L18 is connected to the inlet side as a lower side of the helium flow channel 56, and the heating medium supply path L17 is connected to the outlet side as an upper side thereof. The gas supply path L43 is connected to the inlet side as an upper side of the oxygen flow channel 57, and the oxygen gas discharge path L36 is connected to the outlet side as a lower side thereof.

In the high-temperature steam electrolysis device 13A, the pressure of the high-temperature steam flowing in the steam flow channel 55 is set to be higher than the pressure of the oxygen flowing in the oxygen flow channel 57. Furthermore, in the high-temperature steam electrolysis device 13A, the pressure of the oxygen flowing in the oxygen flow channel 57 is set to be higher than the pressure of the high-temperature secondary helium flowing in the helium flow channel 56.

Thus, the high-temperature secondary helium is supplied from the heating medium supply path L17 to the helium flow channel 56 to heat the high-temperature steam electrolysis cell 51. On the other hand, the high-temperature steam is supplied from the third steam supply path L34 to the steam flow channel 55. At this point, electric power is supplied to the high-temperature steam electrolysis cell 51 from the power supply path L37, and voltage is applied to the hydrogen/steam gas diffusion electrode layer 51b and the oxygen gas diffusion electrode layer 51c. The steam in the steam flow channel 55 is then electrolyzed in the hydrogen/steam gas diffusion electrode layer 51b to generate hydrogen, and the hydrogen flows downward in the steam flow channel 55. On the other hand, oxygen ions generated by electrolysis in the hydrogen/steam gas diffusion electrode layer 51b pass through the high-temperature steam electrolysis cell 51 while being diffused, and are discharged to the oxygen flow channel 57 as oxygen. The hydrogen that has flowed downward in the steam flow channel 55 is discharged to the hydrogen gas discharge path L35. On the other hand, the oxygen flowing downward in the oxygen flow channel 57 is discharged to the oxygen gas discharge path L36.

The gas supply path L43 is connected to the inlet side as the upper side of the oxygen flow channel 57, and the oxygen gas discharge path L36 is connected to the outlet side as the lower side thereof. Thus, the oxygen generated in the oxygen flow channel 57 is conveyed downward by gas supplied from the gas supply path L43, and appropriately discharged to the oxygen gas discharge path L36. In this case, it is preferable to dispose a guide part having a spiral shape on an inner surface of the guide cylinder 61 to cause the oxygen generated in the oxygen flow channel 57 to easily flow downward. The guide part having the spiral shape may be a guide projection part or a guide groove.

### <First modification>

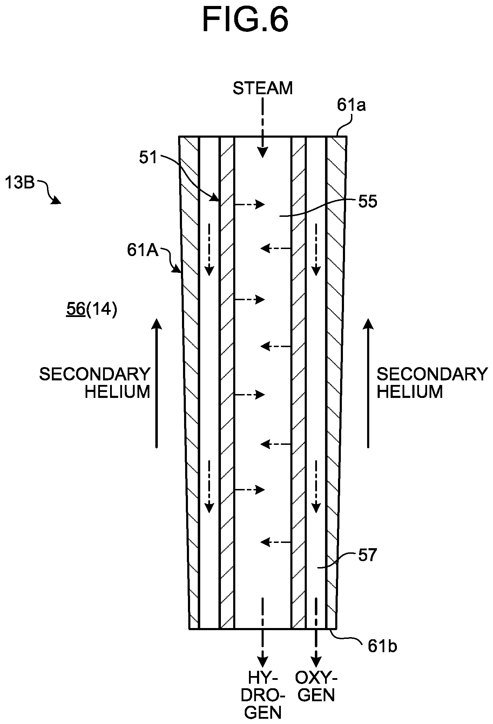

FIG. 6 is a schematic diagram representing the high-temperature steam electrolysis device according to a first modification of the second embodiment.

In the first modification, as illustrated in FIG. 6, a high-temperature steam electrolysis device 13B includes the high-temperature steam electrolysis cell 51, the steam flow channel 55, the helium flow channel 56, and a guide cylinder 61A.

The high-temperature steam electrolysis cell 51 has the same configuration as that in the first embodiment. The guide cylinder 61A is disposed on a radially outer side of the high-temperature steam electrolysis cell 51 with a gap. The guide cylinder 61A has a cylindrical shape having a predetermined thickness, and has an inner diameter that is uniform along the longitudinal direction. An outer diameter of the guide cylinder 61A is reduced toward one side in the longitudinal direction. That is, an outer surface of the guide cylinder 61A is an inclined surface toward one side in the longitudinal direction with respect to an inner surface. Thus, the thickness of the guide cylinder 61A on another end 61b side in the longitudinal direction is smaller than the thickness on one end 61a side in the longitudinal direction. In the first modification, the thickness of the guide cylinder 61A on a downstream side of the flowing direction of the high-temperature steam is smaller than the thickness on an upstream side of the flowing direction of the high-temperature steam.

The steam flow channel 55 through which the high-temperature steam flows is formed on the inner side of the high-temperature steam electrolysis cell 51. The helium flow channel 56 through which the high-temperature helium flows to heat the high-temperature steam electrolysis cell 51 is formed on the outer side of the guide cylinder 61A. The helium flow channel 56 constitutes the heating device 14. Additionally, the oxygen flow channel 57 is formed in an internal space between the high-temperature steam electrolysis cell 51 and the guide cylinder 61A.

In the high-temperature steam electrolysis device 13B, the high-temperature steam and the hydrogen flow downward in the steam flow channel 55, the high-temperature helium flows upward in the helium flow channel 56, and the oxygen flows downward in the oxygen flow channel 57.

Thus, the steam flowing downward in the steam flow channel 55 is electrolyzed to generate hydrogen, and the hydrogen flows downward in the steam flow channel 55. On the other hand, the steam flowing downward in the steam flow channel 55 is electrolyzed to generate oxygen, and the oxygen flows downward in the oxygen flow channel 57. At this point, the steam flowing downward in the steam flow channel 55 consumes heat, and the temperature thereof is gradually lowered. However, the thickness of the guide cylinder 61A is reduced toward the downstream side of the flowing direction of the high-temperature steam. Thus, in the high-temperature steam electrolysis cell 51, thermal energy of the high-temperature secondary helium obtained via the guide cylinder 61A increases as being closer to the lower part. Accordingly, temperature distribution in the longitudinal direction of the steam flow channel 55 is reduced, and lowering of the temperature of the steam is suppressed.

### <Second modification>

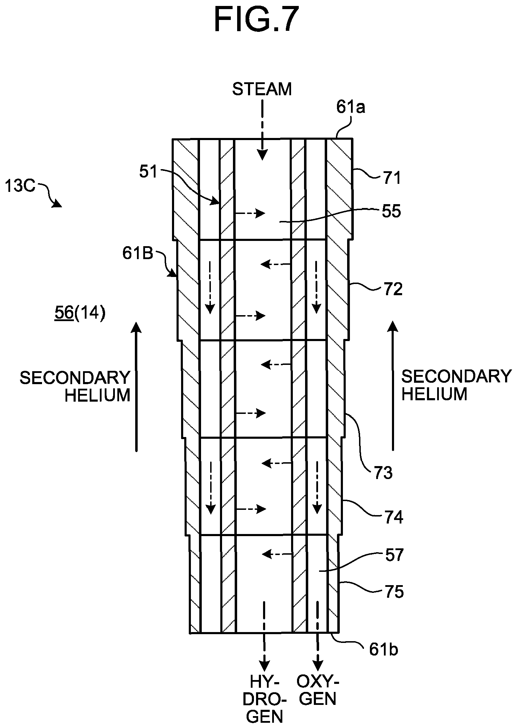

FIG. 7 is a schematic diagram representing the high-temperature steam electrolysis device according to a second modification of the second embodiment.

In the second modification, as illustrated in FIG. 7, a high-temperature steam electrolysis device 13C includes the high-temperature steam electrolysis cell 51, the steam flow channel 55, the helium flow channel 56, and a guide cylinder 61B.

The guide cylinder 61B is disposed on a radially outer side of the high-temperature steam electrolysis cell 51 with a gap. The guide cylinder 61B has a cylindrical shape having a predetermined thickness, and has an inner diameter that is uniform along the longitudinal direction. An outer diameter of the guide cylinder 61B is reduced toward one side in the longitudinal direction. That is, an outer surface of the guide cylinder 61B has a stepped shape toward one side in the longitudinal direction with respect to an inner surface. The guide cylinder 61B is constituted of a plurality of (herein, five) guide parts 71, 72, 73, 74, and 75 respectively having different outer diameters. Thus, the thicknesses of the guide parts 71, 72, 73, 74, and 75 are reduced from the one end 61a side toward the other end 61b of the guide cylinder 61B. In the second modification, the thickness of the guide cylinder 61B on the downstream side of the flowing direction of the high-temperature steam is smaller than the thickness on the upstream side of the flowing direction of the high-temperature steam.

The steam flow channel 55 through which the high-temperature steam flows is formed on the inner side of the high-temperature steam electrolysis cell 51. The helium flow channel 56 through which the high-temperature helium flows to heat the high-temperature steam electrolysis cell 51 is formed on the outer side of the guide cylinder 61B. The helium flow channel 56 constitutes the heating device 14. Additionally, the oxygen flow channel 57 is formed in an internal space between the high-temperature steam electrolysis cell 51 and the guide cylinder 61B.

In the high-temperature steam electrolysis device 13C, the high-temperature steam and the hydrogen flow downward in the steam flow channel 55, the high-temperature helium flows upward in the helium flow channel 56, and the oxygen flows downward in the oxygen flow channel 57.

Thus, the steam flowing downward in the steam flow channel 55 is electrolyzed to generate hydrogen, and the hydrogen flows downward in the steam flow channel 55. On the other hand, the steam flowing downward in the steam flow channel 55 is electrolyzed to generate oxygen, and the oxygen flows downward in the oxygen flow channel 57. At this point, the steam flowing downward in the steam flow channel 55 consumes heat, and the temperature thereof is gradually lowered. However, the thickness of the guide cylinder 61B is reduced toward the downstream side of the flowing direction of the high-temperature steam. Thus, in the high-temperature steam electrolysis cell 51, thermal energy of the high-temperature secondary helium obtained via the guide cylinder 61B increases as being closer to the lower part. Accordingly, temperature distribution in the longitudinal direction of the steam flow channel 55 is reduced, and lowering of the temperature of the steam is suppressed.

### <Third modification>

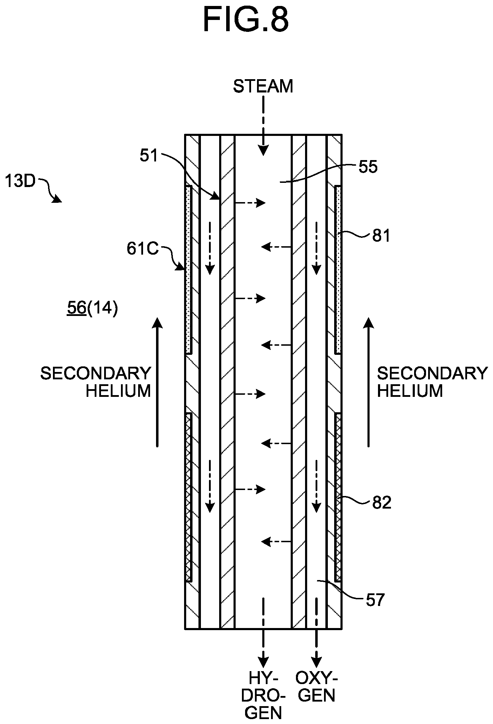

FIG. 8 is a schematic diagram representing the high-temperature steam electrolysis device according to a third modification of the second embodiment.

In the third modification, as illustrated in FIG. 8, a high-temperature steam electrolysis device 13D includes the high-temperature steam electrolysis cell 51, the steam flow channel 55, the helium flow channel 56, and a guide cylinder 61C.

The guide cylinder 61C is disposed on a radially outer side of the high-temperature steam electrolysis cell 51 with a gap. The guide cylinder 61C has a cylindrical shape having a predetermined thickness, and the thickness is uniform along the longitudinal direction.

The steam flow channel 55 through which the high-temperature steam flows is formed on the inner side of the high-temperature steam electrolysis cell 51. The helium flow channel 56 through which the high-temperature helium flows to heat the high-temperature steam electrolysis cell 51 is formed on the outer side of the guide cylinder 61C. The helium flow channel 56 constitutes the heating device 14. Additionally, the oxygen flow channel 57 is formed in an internal space between the high-temperature steam electrolysis cell 51 and the guide cylinder 61C.

Surface roughness parts 81 and 82 are disposed on an inner peripheral surface of the guide cylinder 61c with a gap therebetween in the longitudinal direction. The surface roughness parts 81 and 82 may be disposed on the entire circumference in a circumferential direction, or may be partially or intermittently disposed. Surface roughness of the surface roughness part 82 is larger than that of the surface roughness part 81. That is, a surface of the surface roughness part 81 is finer than an inner surface of the guide cylinder 61c and has a small emissivity, and a surface of the surface roughness part 82 is rougher than the surface roughness part 81 and has a large emissivity. That is, in the guide cylinder 61c, the emissivity on the downstream side of the flowing direction of the high-temperature steam is larger than the emissivity on the upstream side of the flowing direction of the high-temperature steam. The surface roughness parts 81 and 82 may be formed by surface polishing, or projections and depressions may be formed on surfaces thereof by a processing tool. Surface roughness distributions are not limited to two, and may be three or more. The surface roughness distribution may also be continuously changed in the longitudinal direction, or may be controlled by a coating film.

Thus, the steam flowing downward in the steam flow channel 55 is electrolyzed to generate hydrogen, and the hydrogen flows downward in the steam flow channel 55. On the other hand, the steam flowing downward in the steam flow channel 55 is electrolyzed to generate oxygen, and the oxygen flows downward in the oxygen flow channel 57. At this point, the steam flowing downward in the steam flow channel 55 consumes heat, and the temperature thereof is gradually lowered. However, the surface roughness of the guide cylinder 61C is increased toward the downstream side of the flowing direction of the high-temperature steam. Accordingly, in the guide cylinder 61C, radiant heat from the high-temperature secondary helium is increased toward the downstream side of the flowing direction of the high-temperature steam. Thus, in the high-temperature steam electrolysis cell 51, thermal energy of the high-temperature secondary helium obtained via the guide cylinder 61C increases as being closer to the lower part. Accordingly, temperature distribution in the longitudinal direction of the steam flow channel 55 is reduced, and lowering of the temperature of the steam is suppressed.

### [Third embodiment]

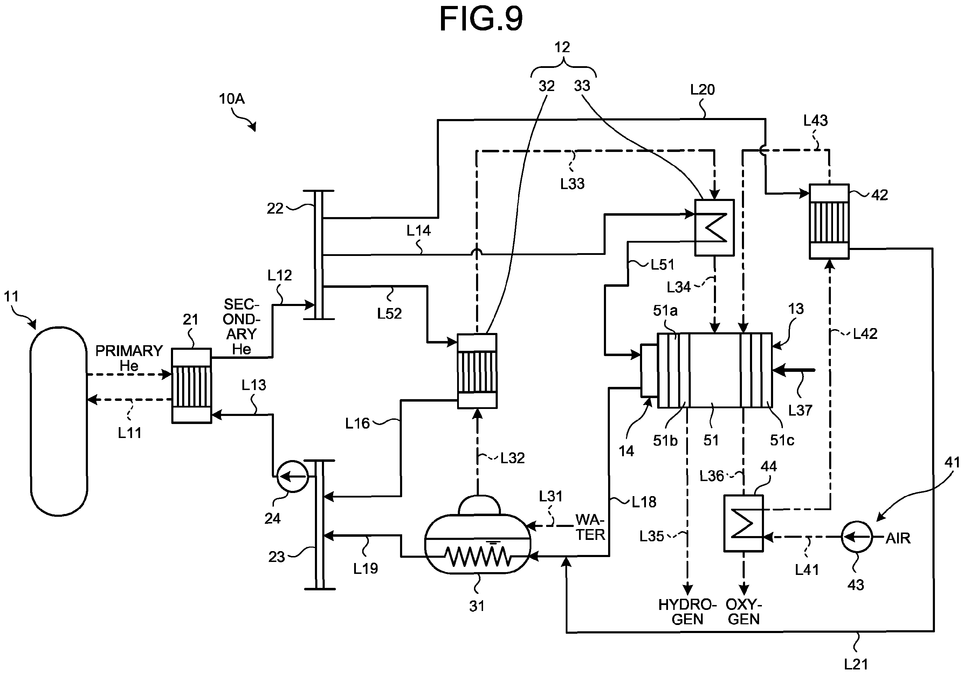

FIG. 9 is a schematic configuration diagram representing the hydrogen production system according to a third embodiment. A member having the same function as that in the first embodiment described above is denoted by the same reference numeral, and detailed description thereof will not be repeated.

In the third embodiment, as illustrated in FIG. 9, similarly to the first embodiment, a hydrogen production system 10A includes the heat source 11, the heat exchanger 12, the high-temperature steam electrolysis device (SOEC) 13, and the heating device 14. In the hydrogen production system 10A in the second embodiment, the heating medium supply path is simplified as compared with the first embodiment.

The supply header 22 is coupled to the second heat exchanger 33 via the heating medium supply path L14. The second heat exchanger 33 is coupled to the heating device 14 via the heating medium supply path L51. The heating device 14 is coupled to the steam generator 31 via the heating medium supply path L18. That is, the secondary helium in the supply header 22 is supplied to the second heat exchanger 33 via the heating medium supply path L14 to superheat the steam, and supplied from the second heat exchanger 33 to the heating device 14 to heat the high-temperature steam electrolysis device 13.

The supply header 22 is coupled to the first heat exchanger 32 via a heating medium supply path L52. The first heat exchanger 32 is coupled to the return header 23 via the heating medium supply path L16. That is, the secondary helium in the supply header 22 is supplied to the first heat exchanger 32 via the heating medium supply path L52 to superheat the steam.

Thus, in the hydrogen production system 10A, the heating medium supply paths L51 and L52 can be simplified by shortening lengths thereof, so that the hydrogen production system 10A can be simplified.

### [Fourth embodiment]

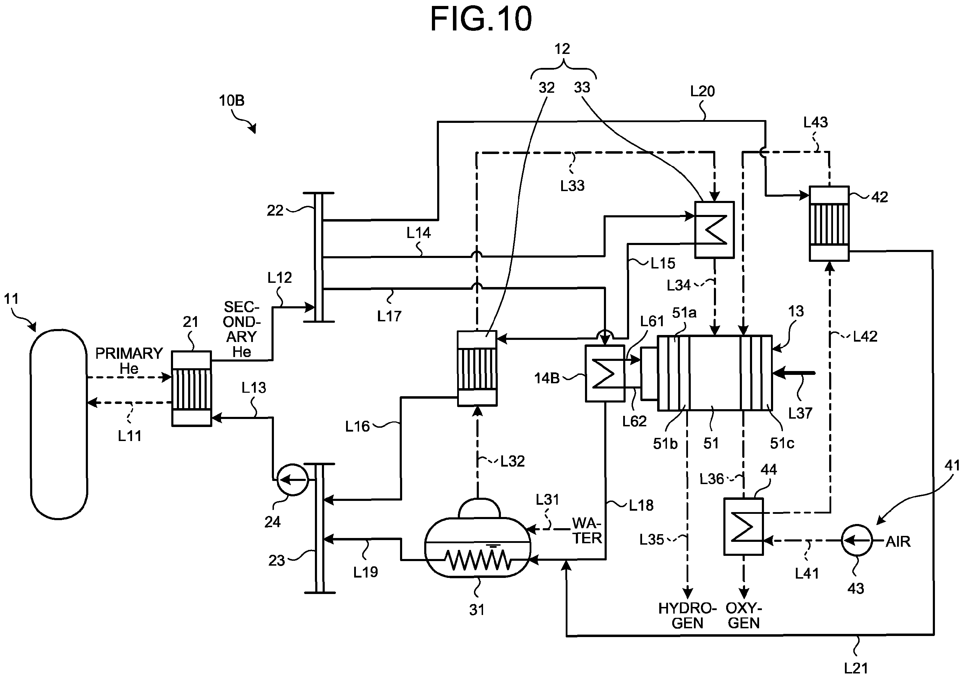

FIG. 10 is a schematic configuration diagram representing the hydrogen production system according to a fourth embodiment. A member having the same function as that in the first embodiment described above is denoted by the same reference numeral, and detailed description thereof will not be repeated.

In the fourth embodiment, as illustrated in FIG. 10, a hydrogen production system 10B includes the heat source 11, the heat exchanger 12, the high-temperature steam electrolysis device (SOEC) 13, and a heating device 14B. The hydrogen production system 10B in the third embodiment is different from the first embodiment in a configuration of the heating device 14B.

The heating device 14B heats the high-temperature steam electrolysis device 13 by using the thermal energy of the secondary helium. The heating device 14B is a heat exchanger that performs heat exchange between the secondary helium and tertiary helium. The heating device 14B heats the tertiary helium by the thermal energy of the secondary helium, and heats the high-temperature steam electrolysis device 13 by using thermal energy of the tertiary helium. At this point, the heating device 14B heats the hydrogen/steam gas diffusion electrode layer 13b and the oxygen gas diffusion electrode layer 13c by the tertiary helium.

That is, the secondary helium in the supply header 22 is supplied to the heating device 14B via the heating medium supply path L17. The heating device 14B heats the tertiary helium by the thermal energy of the secondary helium. The heated tertiary helium is supplied to the high-temperature steam electrolysis device 13 via a heating medium supply path L61, and heats the hydrogen/steam gas diffusion electrode layer 51b and the oxygen gas diffusion electrode layer 51c. The tertiary helium after heating the hydrogen/steam gas diffusion electrode layer 51b and the oxygen gas diffusion electrode layer 51c is returned through a heating medium supply path L62. On the other hand, the secondary helium after heating the tertiary helium is supplied to the steam generator 31 via the heating medium supply path L18.

Thus, in the hydrogen production system 10B, the heat exchanger as the heating device 14B is disposed to perform heat exchange between the secondary helium and the tertiary helium, so that the heating medium supply paths L15 and L18 for the secondary helium can be simplified.

### [Working effect of present embodiment]

The high-temperature steam electrolysis device according to a first aspect includes: the high-temperature steam electrolysis cell 51 having a cylindrical shape in which the hydrogen/steam gas diffusion electrode layer 51b is disposed on the inner side of the electrolyte layer 51a and the oxygen gas diffusion electrode layer 51c is disposed on the outer side thereof; the steam flow channel 55 in which the high-temperature steam flows on the inner side of the high-temperature steam electrolysis cell 51; and the helium flow channel 56 in which the high-temperature helium flows to heat the high-temperature steam electrolysis cell 51 on the outer side of the high-temperature steam electrolysis cell 51.

In the high-temperature steam electrolysis device according to the first aspect, while the high-temperature steam flows in the steam flow channel 55 on the inner side of the high-temperature steam electrolysis cell 51, the high-temperature helium flows in the helium flow channel 56 on the outer side of the high-temperature steam electrolysis cell 51 to heat the high-temperature steam electrolysis cell 51. Thus, by heating the high-temperature steam electrolysis cell 51 by the high-temperature helium, it is possible to suppress generation of carbon dioxide by reducing a use amount of electric energy generated by a thermal power generation system and the like, and energy cost can be reduced.

In the high-temperature steam electrolysis device according to a second aspect, the pressure of the high-temperature steam flowing in the steam flow channel 55 is higher than the pressure of the high-temperature helium flowing in the helium flow channel 56. Due to this, in the high-temperature steam electrolysis cell 51, the pressure in the steam flow channel 55 on the inner side becomes higher than the pressure in the helium flow channel 56 on the outer side, so that the high-temperature steam electrolysis cell 51 is prevented from being damaged due to external pressure, and integrity of the structure can be secured. Additionally, the secondary helium flowing in the helium flow channel 56 can be prevented from passing through the high-temperature steam electrolysis cell 51 to the steam flow channel 55. Furthermore, the generated oxygen tends to be easily diffused to the outside of the high-temperature steam electrolysis cell 51 due to the high-pressure steam flow channel 55. When diffusion speed of the oxygen is increased, concentration polarization of the hydrogen/steam gas diffusion electrode layer 51b can be reduced, and contamination of the oxygen to be recombined with hydrogen can be suppressed.

The high-temperature steam electrolysis device according to a third aspect includes the guide cylinders 61, 61A, 61B, and 61C disposed on the outer side of the high-temperature steam electrolysis cell 51. The helium flow channel 56 is disposed on the outer side of each of the guide cylinders 61, 61A, 61B, and 61C, and the oxygen flow channel 57 is disposed between the high-temperature steam electrolysis cell 51 and each of the guide cylinders 61, 61A, 61B, and 61C. Due to this, by hindering mixing of the oxygen into the secondary helium, the oxygen is not required to be separated from the secondary helium.

In the high-temperature steam electrolysis device according to a fourth aspect, the thickness of each of the guide cylinders 61A and 61B on the downstream side of the flowing direction of the high-temperature steam is smaller than the thickness thereof on the upstream side of the flowing direction of the high-temperature steam. Due to this, in the high-temperature steam electrolysis cell 51, the thermal energy of the high-temperature secondary helium obtained via the guide cylinders 61A and 61B increases as being closer to the lower part, the temperature distribution in the longitudinal direction of the steam flow channel 55 is reduced, and lowering of the temperature of the steam can be suppressed.

In the high-temperature steam electrolysis device according to a fifth aspect, the emissivity on the downstream side of the flowing direction of the high-temperature steam is larger than the emissivity on the upstream side of the flowing direction of the high-temperature steam in the guide cylinder 61C. Due to this, in the high-temperature steam electrolysis cell 51, the radiant heat caused by the secondary helium is increased and the thermal energy of the high-temperature secondary helium obtained via the guide cylinder 61C is increased as being closer to the lower part, the temperature distribution in the longitudinal direction of the steam flow channel 55 is reduced, and lowering of the temperature of the steam can be suppressed.

In the high-temperature steam electrolysis device according to a sixth aspect, the high-temperature steam electrolysis cell 51 is heated by using the secondary helium heated by the thermal energy at 600°C or higher. Due to this, a use amount of electric energy can be reduced, and generation of carbon dioxide can be suppressed.

In the high-temperature steam electrolysis device according to a seventh aspect, the steam is heated by using the secondary helium heated by the thermal energy at 600°C or higher. Due to this, a use amount of electric energy can be reduced, and generation of carbon dioxide can be suppressed.

The hydrogen production method according to an eighth aspect includes the step of causing the high-temperature steam to flow on the inner side of the high-temperature steam electrolysis cell 51 having a cylindrical shape in which the hydrogen/steam gas diffusion electrode layer 51b is disposed on the inner side of the electrolyte layer 51a and the oxygen gas diffusion electrode layer 51c is disposed on the outer side thereof, and the step of causing the high-temperature helium to flow on the outer side of the high-temperature steam electrolysis cell 51 to heat the high-temperature steam electrolysis cell 51. Due to this, by heating the high-temperature steam electrolysis cell 51 by the high-temperature helium, it is possible to suppress generation of carbon dioxide by reducing a use amount of electric energy generated by a thermal power generation system and the like, and energy cost can be reduced.

The hydrogen production system according to a ninth aspect includes the intermediate heat exchanger (heat exchanger) 21 that heats the steam by using the secondary helium heated by thermal energy at 600°C or higher, the high-temperature steam electrolysis device 13 that produces hydrogen by using the steam heated by the secondary helium, and the heating device 14 that heats the high-temperature steam electrolysis device 13 by using the secondary helium heated by the thermal energy. Due to this, the high-temperature steam electrolysis device 13 is heated by using the secondary helium heated by the thermal energy at 600°C or higher, the steam is heated by using the secondary helium heated by the thermal energy at 600°C or higher, and the high-temperature steam is supplied to the high-temperature steam electrolysis device 13 to produce hydrogen by electrolysis. Thus, it is possible to suppress generation of carbon dioxide by reducing a use amount of electric energy generated by a thermal power generation system and the like, and energy cost can be reduced. Reference Signs List

10, 10A, 10B Hydrogen production system
11 Heat source
12 Heat exchanger
13, 13A, 13B, 13C, 13D High-temperature steam electrolysis device
14, 14B Heating device
21 Intermediate heat exchanger (heat exchanger)
22 Supply header
23 Return header
24 Circulator
31 Steam generator
32 First heat exchanger
33 Second heat exchanger
41 Gas supply device
42 Gas heating device
43 Circulator
44 Heat exchanger
51 High-temperature steam electrolysis cell
51a Electrolyte layer
51b Hydrogen/steam gas diffusion electrode layer
51c Oxygen gas diffusion electrode layer
52 Container main body
53 Inlet header
54 Outlet header
55 Steam flow channel
56 Helium flow channel
57 Oxygen flow channel
61, 61A, 61B, 61C Guide cylinder
71, 72, 73, 74, 75 Guide part
81 First surface roughness part
82 Second surface roughness part
L11 Circulation path
L12 Supply path
L13 Return path
L14, L15, L16, L17, L18, L19, L20, L21, L51, L52, L61, L62 Heating medium supply path
L31 Water supply path
L32 First steam supply path
L33 Second steam supply path
L34 Third steam supply path
L35 Hydrogen gas discharge path
L36 Oxygen gas discharge path
L37 Power supply path
L41, L42, L43 Gas supply path

## Claims

1. A high-temperature steam electrolysis device comprising:
a high-temperature steam electrolysis cell having a cylindrical shape in which a hydrogen/steam gas diffusion electrode layer is disposed on an inner side of an electrolyte layer and an oxygen gas diffusion electrode layer is disposed on an outer side thereof;
a steam flow channel in which high-temperature steam flows on an inner side of the high-temperature steam electrolysis cell; and
a helium flow channel in which high-temperature helium flows to heat the high-temperature steam electrolysis cell on an outer side of the high-temperature steam electrolysis cell.

2. The high-temperature steam electrolysis device according to claim 1, wherein a pressure of the high-temperature steam flowing in the steam flow channel is higher than a pressure of the high-temperature helium flowing in the helium flow channel.

3. The high-temperature steam electrolysis device according to claim 1 or 2, comprising a guide cylinder disposed on the outer side of the high-temperature steam electrolysis cell, wherein the helium flow channel is disposed on an outer side of the guide cylinder, and an oxygen flow channel is disposed between the high-temperature steam electrolysis cell and the guide cylinder.

4. The high-temperature steam electrolysis device according to claim 3, wherein a thickness of the guide cylinder on a downstream side of a flowing direction of the high-temperature steam is smaller than a thickness thereof on an upstream side of the flowing direction of the high-temperature steam.

5. The high-temperature steam electrolysis device according to claim 3, wherein an emissivity of the guide cylinder on a downstream side of a flowing direction of the high-temperature steam is larger than an emissivity thereof on an upstream side of the flowing direction of the high-temperature steam.

6. The high-temperature steam electrolysis device according to claim 1, wherein the high-temperature steam electrolysis cell is heated by using helium heated by thermal energy at 600°C or higher.

7. The high-temperature steam electrolysis device according to claim 1, wherein steam is heated by using helium heated by thermal energy at 600°C or higher.

8. A hydrogen production method comprising the steps of:
causing high-temperature steam to flow on an inner side of a high-temperature steam electrolysis cell having a cylindrical shape in which a hydrogen/steam gas diffusion electrode layer is disposed on an inner side of an electrolyte layer and an oxygen gas diffusion electrode layer is disposed on an outer side thereof; and
causing high-temperature helium to flow on an outer side of the high-temperature steam electrolysis cell to heat the high-temperature steam electrolysis cell.

9. A hydrogen production system comprising:
a heat exchanger that heats steam by using high-temperature helium heated by thermal energy at 600°C or higher;
the high-temperature steam electrolysis device according to any one of claims 1 to 7 that produces hydrogen by using the steam heated by the high-temperature helium; and
a heating device that heats the high-temperature steam electrolysis device by using the high-temperature helium heated by the thermal energy.
